(19) **Europäisches Patentamt**

**European Patent Office**

**Office européen des brevets**

(11) **EP 1 321 575 A1**

(12) **EUROPÄISCHE PATENTANMELDUNG**

(43) Veröffentlichungstag:
   **25.06.2003 Patentblatt 2003/26**

(51) Int Cl.⁷: **D21H 27/28**, B32B 29/00

(21) Anmeldenummer: **02028521.9**

(22) Anmeldetag: **19.12.2002**

(84) Benannte Vertragsstaaten:
   **AT BE BG CH CY CZ DE DK EE ES FI FR GB GR IE IT LI LU MC NL PT SE SI SK TR**
   Benannte Erstreckungsstaaten:
   **AL LT LV MK RO**

(30) Priorität: **21.12.2001 DE 10163344**

(71) Anmelder: **PAPIERFABRIK SCHOELLER & HOESCH GMBH & CO. KG**
   **76593 Gernsbach (DE)**

(72) Erfinder:
   • **Sick, Stefan**
     **76534 Baden-Baden (DE)**
   • **Blum, Horst**
     **76593 Gernsbach (DE)**
   • **Hansmann, Robert**
     **77815 Bühl (DE)**

(74) Vertreter: **Henkel, Feiler, Hänzel**
   **Möhlstrasse 37**
   **81675 München (DE)**

(54) **Lichtbeständiges Overlaypapier**

(57)   Beschrieben wird ein Overlaypapier, das ein Zellstoffvlies umfasst, das mit einem UV-Stabilisierungsmittel in einer Menge von 0,001 bis 10 Gew.-%, bezogen auf das Flächengewicht des eingesetzten Vlieses, beaufschlagt ist, ein Verfahren zur Herstellung desselben sowie die Verwendung desselben zur Herstellung eines Laminats.

**EP 1 321 575 A1**

**Beschreibung**

Die vorliegende Erfindung betrifft in ihrer allgemeinen Form ein lichtbeständiges bzw. zur Lichtbeständigkeit beitragendes Overlaypapier sowie ein Verfahren zur Herstellung eines solchen Papiers.

Gebiet der Erfindung

Overlaypapiere im allgemeinen sind Zellstoffpapiere, die gefüllt oder nicht gefüllt sind, d.h. mit Teilchen großer Härte ausgerüstet sein können, um die Abriebfestigkeit zu erhöhen.

Verwendung finden Overlaypapiere üblicherweise in Schichtstoffplatten, wie sie beispielsweise in der Möbelindustrie für Küchen- und Arbeitsplatten oder Restauranttheken verwendet werden, in Laminatfußböden oder in aus Polymerharzen hergestellten Gegenständen, wie beispielsweise Aschenbechern, Zahltellern, Kunststoffgeschirren oder Serviertabletts.

Bei der Fertigung von Schichtstoffplatten und Laminatfußböden wird aus dem Overlaypapier gewöhnlich in einem ersten Schritt in einer Imprägnieranlage durch Polymerharztränkung, vorzugsweise mit einem Melaminformaldehydharz, und nachfolgende Trocknung ein fester Film hergestellt. Dieser wird in einem zweiten Schritt gegen ein Dekorpapier, welches ebenso imprägniert sein kann, sowie in der Regel gegen imprägnierte Kraftpapiere gepresst und in einem weiteren Schritt auf eine Faserplatte, beispielsweise eine MDF-, HDF- oder Sperrholzplatte, kaschiert.

Alternativ kann in einem einzigen Schritt ein Verpressen des Overlaypapiers gegen ein Dekorpapier, Kraftpapier, eine Faserstoffplatte und ein Gegenzugpapier erfolgen.

Ferner kann das Overlaypapier in verschiedenen Anwendungen selbst als Dekorträger dienen, wenn es vor dem Imprägnieren mit einem Polymerharz selbst bedruckt wird.

Overlaypapiere besitzen im allgemeinen die folgenden Aufgaben:

1) Schutz der Oberfläche vor Abrasion und Verkratzen und somit Schutz des Dekors; und
2) Bildung einer geschlossenen Oberfläche durch Formen eines festen Verbundes mit darunter liegenden Schichten und dem Polymerharz.

Zur Erfüllung dieser Aufgaben muss ein Overlaypapier somit die folgenden Eigenschaften besitzen:

a) Ausreichende Nassfestigkeit (hohe Nassbruchkraft) während des Imprägnier- und Trocknungsprozesses;
b) hohe Harzaufnahme und rasche Harzpenetrierbarkeit;
c) homogene Harzverteilung in x, y, z-Richtung;
d) hohe Dimensionsstabilität;
e) eng eingestellter pH-Wert zur Erzielung optimaler Kondensationsbedingungen des Polymerharzes;
f) homogene Verteilung des Füllstoffs bei mit Füllstoff gefüllten Overlaypapieren;
g) gute Bedruckbarkeit (ausreichende Glätte und ausreichende Einbindung von Fasern an der Oberfläche);
h) hohe Transparenz nach dem Verpressen des aus dem Overlaypapier hergestellten Films, und
i) ausreichende Temperaturstabilität, da der Pressprozess bei Temperaturen von mehr als 150°C stattfinden kann.

Auf dem einschlägigen Fachgebiet ist es allgemein bekannt, dass aufgrund der Vielzahl der Anforderungen an das Overlaypapier sowohl die Auswahl der Rohstoffe für das Overlaypapier (d.h. Zellstoffe und Hilfsmittel) als auch der Herstellungsprozess wie beispielsweise bezüglich Mahlgrad und Trocknung Einschränkungen unterliegen.

Die Zugabe chemischer Hilfsstoffe wurde deshalb mit Ausnahme von Nassfestmitteln, üblicherweise Melaminformaldehydharzen, welche im Produktionsprozess zum Faserbrei zugegeben wurden, vermieden.

Ferner wurde auf dem einschlägigen Fachgebiet auch deshalb auf die Zugabe weiterer Hilfsstoffe verzichtet, da in solchen Fällen unerwünschte Wechselwirkungen mit dem Polymerharz nicht ausgeschlossen werden konnten (beispielsweise eine Beschleunigung oder Verlangsamung des Kondensationsprozesses, eine Veränderung der Rheologie des Harzes im Pressprozess und eine damit einhergehende ungleichmäßige Transparenz) und es nicht möglich war, der Gesamtheit der Anforderungen an das Overlaypapier gerecht zu werden.

Dies gilt insbesondere im Hinblick auf die Lichtbeständigkeit, die bei der Verwendung von Zellstoffen und Additiven eine wesentliche Eigenschaft darstellt. So können beispielsweise nicht lichtbeständige Additive zu einem Vergilben des Overlaypapiers, des aus dem Overlaypapier produzierten Films und/oder des letztlich produzierten Laminats führen.

Ferner ist bekannt, dass in vielen Fällen gegebenenfalls in das Overlaypapier eingearbeitete Additive im Harztränkungsprozess ausgewaschen werden und sich so im Harzbad sowie an Dosierwalzen abscheiden, was zu Verunreinigungen der Filmoberfläche führt und damit unerwünschte Reinigungszeiten bedingt.

Aufgabe der Erfindung:

Aufgabe der vorliegenden Erfindung war es somit, diese dem Stand der Technik innewohnenden Nachteile zu überwinden und ein lichtbeständiges bzw. zur Lichtbeständigkeit beitragendes Overlaypapier sowie ein Verfahren zur Herstellung desselben anzugeben.

Gegenstand der Erfindung:

Erfindungsgemäß wird ein lichtbeständiges Overlaypapier gemäß Patentanspruch 1 sowie ein Verfahren zur Herstellung desselben gemäß Patentanspruch 6 bereitgestellt. Bevorzugte Ausführungsformen des Overlaypapiers und des Verfahrens sind in den jeweiligen Unteransprüchen angegeben.
Gegenstand der vorliegenden Erfindung ist ferner die Verwendung eines derartigen Overlaypapiers zur Herstellung eines UVbeständigen Laminats.
Die vorliegende Erfindung basiert auf der überraschenden Erkenntnis, dass ein mit speziellen UV-Stabilisatoren beaufschlagtes Overlaypapier alle oben genannten Eigenschaften eines Overlaypapiers erfüllt und darüber hinaus eine ausgezeichnete Lichtbeständigkeit aufweist.

Detaillierte Beschreibung der Erfindung:

Das erfindungsgemäße Overlaypapier umfasst üblicherweise ein Zellstoffvlies, das mit einem UV-Stabilisierungsmittel in einer Menge von 0,001 bis 10 Gew.-%, bezogen auf das Flächengewicht des eingesetzten Vlieses, beaufschlagt ist.
Die Menge an UV-Stabilisierungsmittel beträgt zweckmäßigerweise 0,01 bis 3 Gew.-%, bezogen auf das Flächengewicht des eingesetzten Vlieses, vorzugsweise 0,05 bis 1,0 Gew.-%.
Das hierbei verwendete UV-Stabilisierungsmittel ist üblicherweise aus Benzotriazolen, Diphenylacrylaten, Cinnamaten, sterisch gehinderten Aminen und Benzophenonen ausgewählt. Vorzugsweise handelt es sich um Benzotriazolverbindungen oder Benzophenonverbindungen, in stärker bevorzugter Weise um Hydroxybenzophenone und/oder Hydroxyphenylbenzotriazole, in noch stärker bevorzugter Weise um 2-Hydroxybenzophenone, 2,4-Dihydoxybenzophenone, 2-Phenylbenzotriazole.
Weitere erfindungsgemäß bevorzugte UV-Stabilisierungsmittel sind sterisch gehinderte Amine, beispielsweise solche mit einem Piperidin-1-yl-Gerüst oder Aminoxyamin-Gerüst.
Diese UV-Stabilisierungsmittel sind üblicherweise wasserlöslich oder in Wasser fein dispergierbar, zeigen eine hinreichende thermische Stabilität (> 150°C) und werden gut von den Zellstoffvliesen absorbiert.
Bei dem erfindungsgemäß eingesetzten UV-Stabilisierungsmittel handelt es sich beispielsweise in einer bevorzugten Ausführungsform um das im Handel unter der Bezeichnung Evertex AF-20P erhältliche Produkt.
Bei dem erfindungsgemäß eingesetzten Vlies handelt es sich üblicherweise um ein Zellstoffvlies, das gewöhnlich 1 bis 99,9 Gew.-% gebleichte oder ungebleichte Zellstofffasern umfasst. Bei den Zellstofffasern kann es sich um solche aus Nadelholzund/oder Laubholzzellstofffasern handeln.
Das Zellstoffvlies kann ferner 0,1 bis 99 Gew.-% andere Faserzuschläge, beispielsweise Zellwolle und/oder Baumwollfasern, enthalten. Bei den Baumwollfasern handelt es sich vorzugsweise um solche, die alkalisch gewaschen sind.
In einer bevorzugten Ausführungsform der vorliegenden Erfindung besteht das erfindungsgemäß eingesetzte Vlies aus mindestens 30 Gew.-% Zellstoff, der vorzugsweise von Nadelholz herrührt.
Zur Verwendung als Overlaypapier bestimmte Vliese lassen sich auf Papiermaschinen üblicherweise mit einem Flächengewicht zwischen 8 und 100 g/m$^2$, vorzugsweise zwischen 12 und 60 g/m$^2$ herstellen.
Ferner kann das erfindungsgemäße Overlaypapier die folgenden Bestandteile umfassen:

1. Nassfestmittel, vorzugsweise Melaminformaldehydharz, gewöhnlich in einer Menge von 0,1 bis 20 Gew.% Trockensubstanz Nassfestmittel, bezogen auf das eingesetzte Fasergewicht, vorzugsweise 0,8 bis 5 Gew.-% Trockensubstanz, bezogen auf das eingesetzte Fasergewicht.

2. Die Abrasivität des Overlaypapiers verbessernde Mittel, beispielsweise Korundpartikel, gewöhnlich in einer Menge von 0,1 bis 60 Gew.-%, bezogen auf das eingesetzte Fasergewicht, vorzugsweise 0,3 bis 50 Gew.-%, bezogen auf das eingesetzte Fasergewicht. Beispielsweise handelt es sich bei den eingesetzten Korundpartikeln um harzummantelte Korundpartikel, wie sie in der DE 199 39 060 A1 beschrieben sind.

Im nachfolgenden wird das erfindungsgemäße Verfahren zur Herstellung des erfindungsgemäßen Overlaypapiers beschrieben.

Zunächst wird in einem ersten Schritt üblicherweise unter Verwendung einer Papiermaschine ein Faserkörper hergestellt.

Als Papiermaschinen eignen sich dabei erfindungsgemäß Langsieb-, Schrägsieb- oder Rundsiebmaschinen, vorzugsweise Schrägsiebmaschinen mit Durchströmtrocknung.

Als Rohstoffe dienen vorzugsweise ungemahlene oder gemahlene, gebleichte oder ungebleichte Zellstoffe aus Laub- und/oder Nadelholz.

Aus den Rohstoffen, die üblicherweise aus gemahlenen Naturfasern und gegebenenfalls einem Anteil anderer Fasern bestehen, wird mit Wasser eine Suspension hergestellt. Diese Suspension kann gemäß einer Ausführungsform der vorliegenden Erfindung ferner die Abrasivität des herzustellenden Overlaypapiers verbessernde Partikel in einer geeigneten Menge umfassen.

Die oben hergestellte Suspension wird dann aus einem Vorratsbehälter üblicherweise über den sogenannten Stoffauflauf (head box) der Papiermaschine zugeführt. Diese besitzt im wesentlichen ein umlaufendes Sieb, welches über eine Anzahl von Entwässerungskammern hinweggeführt wird.

Über geeignete Rohrleitungen und Pumpvorrichtungen wird die Suspension auf das Sieb über den Entwässerungskammern geleitet, wobei durch die Kammern und die Entwässerungsleitung das Wasser abgesaugt wird. Dabei bildet sich auf dem bewegten Sieb eine Faserschicht aus.

Diese Faserschicht wird nun von dem Sieb abgenommen und einer Trocknung zugeführt. Diese Trocknung kann auf verschiedene Art und Weise erfolgen, z. B. durch Kontakttrocknung oder Durchströmtrocknung.

Die Beaufschlagung des Zellstoffvlieses erfolgt erfindungsgemäß zweckmäßigerweise nach einer primären Trocknung der Papierbahn über eine Kontakt- oder Durchströmtrocknung mittels der Leimpresse oder alternativ über einen Sprühbalken, der das UV-Stabilisierungsmittel beispielsweise direkt auf dem Papiermaschinensieb vor der Trocknung aufbringt.

Die Beaufschlagung erfolgt üblicherweise mit einer wässrigen Lösung des UV-Stabilisierungsmittels, welche erfindungsgemäß eine 0,01 bis 50 %ige wässrige Lösung oder Suspension des UV-Stabilisierungsmittels, vorzugsweise eine 0,1 bis 5 %ige wässrige Lösung oder Suspension des UV-Stabilisierungsmittels und insbesondere eine 1 bis 3 %ige wässrige Lösung oder Suspension des UV-Stabilisierungsmittels umfasst.

Gegenstand der vorliegenden Erfindung ist somit auch ein Verfahren zur Herstellung der erfindungsgemäßen Overlaypapiers, bei dem unter Verwendung einer Papiermaschine das Vlies nach einer primären Trocknung mit einem UV-Stabilisierungsmittel in einer Menge von 0,001 bis 10 Gew.-%, bezogen auf das Flächengewicht des eingesetzten Vlieses, beaufschlagt wird.

Überraschenderweise wurde erfindungsgemäß festgestellt, dass auch nach der Tränkung des erfindungsgemäßen Overlaypapiers in einer wässrigen Harzlösung, beispielsweise einer Melaminformaldehydpolymerlösung und Verweilen in dieser während einer Zeitdauer von beispielsweise 3 s, mehr als 60%, üblicherweise mehr als 80% und vorzugsweise mehr als 95% des UV-Stabilisierungsmittels in dem erfindungsgemäß hergestellten Overlaypapier verbleiben.

Die Bestimmung der Menge an durch das Vlies festgehaltenem UV-Stabilisierungsmittel erfolgte dabei erfindungsgemäß wie folgt:
Ein erfindungsgemäß mit einer festgelegten Menge UV-Stabilisierungsmittel beaufschlagtes Vlies wurde 3 s in einer 50 %igen wässrigen Melaminformaldehydpolymerharzlösung getränkt und danach der Verlust an UV-Stabilisierungsmittel durch Konzentrationsbestimmung des UV-Stabilisierungsmittel im Harzbad mittels UV/VIS-Spektroskopie bestimmt. Als Vergleich dienten Blindproben, bei denen ein zuvor beschriebenes 50 %iges Melaminformaldehydpolymerharzbad mit definierten Mengen an UV-Stabilisierungsmittel versetzt wurde.

Ohne an irgendeine Theorie gebunden sein zu wollen, gehen die Erfinder der vorliegenden Erfindung derzeit davon aus, dass die erfindungsgemäß verwendeten UV-Stabilisierungsmittel eine ausgezeichnete Affinität zur Oberfläche des Vlieses zeigen und zu sehr hohen Anteilen durch die Zellwände in das Innere des Zellstoffvlieses eindringen und daher nicht leicht von der Polymerharzlösung ausgewaschen werden.

Ferner besitzt das erfindungsgemäße Overlaypapier eine ausgezeichnete UV-Stabilität von 7 bis 8 auf der Wollskala.

Diese wurde erfindungsgemäß wie folgt gemessen:
Das erfindungsgemäße Overlaypapier wurde über eine Zeitdauer von 168 Stunden intensiven Strahlungsbedingungen (Strahlungsleistung 1,1 W/m$^2$) ausgesetzt. Als Vergleich diente ein Overlaypapier, in das kein UV-Stabilisierungsmittel eingearbeitet worden war. Anschließend erfolgte die Messung der UV-Stabilität unter Verwendung der Lichtechtheitsstufen der Wollskala (DIN Norm 53388).

Hierbei wird die bestrahlte Probenfläche mit während der Bestrahlung abgedeckten Probenfläche verglichen. Als Interpretationshilfe dient dabei die sog. Grauskala (Grauskala nach ISO 105A02), wobei die Lichtechtheitsstufen 7 und 8 dem Kontrast der Stufe 4 der Grauskala entsprechen. Die Lichtechtheitsstufe 6 entspricht einem deutlich erkennbaren Kontrast zwischen bestrahlter und unbestrahlter Probe analog zu Stufe 3 der Grauskala.

Ferner weist das erfindungsgemäße Overlaypapier in einer bevorzugten Ausführungsform einen pH-Wert im Bereich von 5 bis 7,5, vorzugsweise im Bereich von 5,5 bis 6,5 auf.

Darüber hinaus besitzt ein erfindungsgemäßes Overlaypapier vorzugsweise die folgenden Eigenschaften:

a) Ausreichende Nassfestigkeit (hohe Nassbruchkraft) während des Imprägnier- und Trocknungsprozesses;
b) hohe Harzaufnahme und rasche Harzpenetrierbarkeit;
c) homogene Harzverteilung in x, y, z-Richtung;
d) hohe Dimensionsstabilität;
e) homogene Verteilung des Füllstoffs bei mit Füllstoff gefüllten Overlaypapieren;
f) gute Bedruckbarkeit (ausreichende Glätte und ausreichende Einbindung von Fasern an der Oberfläche);
g) hohe Transparenz nach dem Verpressen des aus dem Overlaypapier hergestellten Films, und
h) ausreichende Temperaturstabilität, da der Pressprozess bei Temperaturen von mehr als 150°C stattfinden kann.

Gegenstand der vorliegenden Erfindung ist ferner die Verwendung eines erfindungsgemäßen Overlaypapiers zur Herstellung eines Laminats.

Hierzu wird das erfindungsgemäße Overlaypapier gewöhnlich in einem ersten Schritt in einer Imprägnieranlage durch Polymerharztränkung, vorzugsweise mit einem Melaminformaldehydharz, und nachfolgende Trocknung zu einem festen Film verarbeitet. Dieser kann dann in einem zweiten Schritt gegen ein Dekorpapier, welches ebenso imprägniert sein kann, sowie in der Regel gegen imprägnierte Kraftpapiere gepresst und in einem weiteren Schritt auf eine Faserplatte, beispielsweise eine MDF-, HDF- oder Sperrholzplatte, kaschiert werden.

Alternativ kann in einem einzigen Schritt ein Verpressen des Overlaypapiers gegen ein Dekorpapier, Kraftpapier, eine Faserstoffplatte und ein Gegenzugpapier erfolgen.

Verwendung finden die erfindungsgemäßen Overlaypapiere üblicherweise in Schichtstoffplatten, wie sie beispielsweise in der Möbelindustrie für Küchen- und Arbeitsplatten oder Restauranttheken verwendet werden, in Laminatfußböden oder in aus Polymerharzen hergestellten Gegenständen, wie beispielsweise Aschenbechern, Zahltellern, Kunststoffgeschirren oder Serviertabletts.

Ferner kann das erfindungsgemäße Overlaypapier in verschiedenen Anwendungen selbst als Dekorträger dienen, wenn es vor dem Imprägnieren mit einem Polymerharz selbst bedruckt wird.

Im folgenden wird die vorliegende Erfindung anhand eines Beispiels weiter veranschaulicht. Es ist jedoch selbstverständlich, dass das Beispiel die vorliegende Erfindung, wie sie in den beigefügten Ansprüchen definiert ist, in keiner Weise einschränkt.

Beispiel:

Der eingesetzte UV-Absorber besteht aus dem im Handel erhältlichen UV-Stabilisierungsmittel Evertex AF-20P (Mischung von 20% Phenol-2-(5-chloro-2H-benzotriazol-2yl)-6-(1,1-dimethylethyl)-4-methyl-bumetriazol, 78% destilliertes Wasser und 2% Additive (Tenside)). Dieses Gemisch wurde zu einer 10%igen Lösung mit destilliertem/entonisiertem Wasser verdünnt und nach der primären Trocknung der Papierbahn über die Leimpresse bei einer Temperatur von 30 - 45°C aufgetragen.

Als Basispapiere dienten bei einer ersten Probe eine Mischung aus 50% Nadelholzzellstoff und 50% Laubholzzellstoff und bei einer zweiten Probe eine Mischung aus 100% Nadelholzzellstoff gewählt.

Erzielt wird hierbei eine Beaufschlagung von bis zu 3 Gew.-% des UV-Stabilisierungsmittels, bezogen auf das Flächengewicht des Basispapiers.

Zur Beurteilung der Eigenschaften der hergestellten Overlaypapiere wurden die folgenden Parameter bestimmt:

Nassbruchkraft[1]: in Längsrichtung gemäß DIN/EN ISO 1924/2

Harzaufnahme[2]: Verwendet wurde zur Prüfung eine frisch angesetzte 50%ige wässerige Lösung des Melaminformaldehydharzes Madurit MW 450 (Hersteller Solutia GmbH), welche bis zur vollständigen Klarheit bei einer Temperatur von max. 95°C gerührt und dann auf 35°C abgekühlt wird. Ein 100cm$^2$ großes, mit dem Kreisschneider geschnittenes Papierstück einer der beiden Proben des erfindungsgemäß beaufschlagten Overlaypapiers wird auf einer Analysenwaage ausgewogen und auf die Harzoberfläche einer mit der Harzlösung gefüllten Kristallisierschale bis zum erkennbaren Durchschlag des Harzes gelegt. Hierauf wird es entfernt und das auf der Oberfläche des Papieres befindliche überschüssige Harz mittels eines Glasstabs abgestreift.

$$\text{Harzaufnahme} = \frac{\text{Endgewicht - Papiergewicht}}{\text{Endgewicht}}$$

Harzpenetration[3]: Bei der vorgenannten Harzaufnahme wird die erkennbare Durchschlagszeit ermittelt.

Transparenz[4]: Hierzu wird eine 50%ige Lösung des Harzes Madurit MW 490S (Hersteller Solutia GmbH) mit bezogen auf die Harzlösung 1,0 - 1,2% Madurit MH 835 (Hersteller Solutia GmbH) verwendet. Diese Harzlösung wird in eine Wanne gegeben und das Overlay-Papier in dieser Wanne bis zur wollständigen Penetration getränkt. Hierauf wird überschüssiges Harz mit einem Glasstab abgestreift und der entstandene Film wird in folgendem Schichtaufbau in eine Laborpresse gelegt:

1 Lage Overlay-Film
1 Lage Dekorpapier        (imprägniert)
MDF Platte
1 Lage Gegenzugpapier        (imprägniert)

Bei einer Pressblechtemperatur von 190°C und einer Verweilzeit von 30 s sowie einem Pressdruck von 300 N/cm$^2$ wird dieses System zu einer Schichtstoffplatte gepresst.
Die Transparenz der entstandenen Oberfläche wird im Vergleich zu einem Referenzmuster und analog zu den Bedingungen in der NEMA (National Electric Manufacturer Association) -Standards Publication LD 3-2000 S. 9-10 beurteilt.
UV-Stabilität nach Bestrahlung[5]: Verwendet wird als Strahlungsquelle eine Xenon-Gasentladungslampe mit einer spektralen Bandbreite von 280 - 800 nm und eine Strahlungsleistung von 1,10 ± 0,3 W/m$^2$. Das Testgerät (Probenhalterung, Entladungslampe und Filter) ist konform ASTM G26 und entspricht im Weiteren der Beschreibung NEMA LD 3-2000.
Die Probe wird ca. 48 h bei 23°C ± 2°C und 50 ± 5% relativer Luftfeuchtigkeit vorkonditioniert.
Die Probe wird zur Hälfte mit einer UV-lichtundurchlässigen Platte abgedeckt und wird nach dem Bestrahlungszeitraum erneut für 24 h bei den vorgenannten Bedingungen konditioniert. Die optische Beurteilung erfolgt in einem Abstand Auge zu Probenkörper von 750 - 900 mm und bei einem Winkel von 45 - 75°, wobei der Probenkörper zur Beurteilung aus verschiedenen Winkeln in der horizontalen Planlage gedreht wird.
Darüber hinaus wird ein Vergleich des auf schwarzem Dekorpapier verpresstem Laminats mit der im Handel erhältlichen Woll-Farbskala durchgeführt.
UV-Stabilität nach natürliches Lichteinfall[6]: Die Probe wird im 45°Winkel zur horizontalen hinter einer in Südostrichtung stehende Fensterscheibe positioniert. Die Auswertung erfolgt analog zur vorgenannten Bestrahlung mit einer UV-Lampe.
Gehalt an UV-Stabilisator[7]: Die Bestimmung des Gehalts an UV-Stabilisator erfolgte mittels UV/VIS-Spektroskopie unter Verwendung des oben für die Messung der Harzaufnahme bzw. Harzpenetration verwendeten Harzbads nach der Penetration des beiden hergestellten erfindungsgemäßen Overlaypapierproben, wobei 1 g des Harzbades in 100 ml N,N-Dimethylformamid (DMF) gelöst wurden und danach die Absorption dieser Lösung bei einer Wellenlänge von 350 nm gemessen wurde. Zur Eichung der Messungen (zur Bestimmung der absoluten Menge an UV-Stabilisator) diente eine Vergleichsmessung mit einem analogen Harzbad, dem eine festgelegte Menge UV-Stabilisator zugesetzt war.
Als Gegenprobe wurde ferner der Gehalt (bezogen auf das Flächengewicht des hergestellten Overlaypapiers) an beaufschlagtem UV-Stabilisator im erfindungsgemäßen Overlaypapier nach Herstellung des Overlaypapiers vor Einbringung in das Harzbad bestimmt, wobei eine definierte Menge des Overlaypapiers mit 100 ml DMF 1 h extrahiert wurde und in der DMF-Lösung anschließend wie oben der Gehalt an UV-Stabilisator mittels UV/VIS-Spektroskopie ermittelt wurde.

| | 50% NH-Zellstoff 50% LH-Zellstoff unbehandelt | 50% NH-Zellstoff 50% LH-Zellstoff UV-stabilisiert (s.o.) | 100% NH-Zellstoff unbehandelt | 100% NH-Zellstoff UV-stabilisiert (s.o.) |
|---|---|---|---|---|
| | | | | |
| Nassbruchkraft[1] | 6,7 N/15mm | 6,6 N/15mm | 6,5 N/15mm | 6,5 N/15mm |
| | | | | |
| Harzaufnahme[2] | 78,9 % | 79,2 % | 81,6 % | 81,4 % |
| | | | | |
| Harzpenetration[3] | 4 s | 4 s | 1 s | 1 s |

(fortgesetzt)

| | 50% NH-Zellstoff 50% LH-Zellstoff unbehandelt | 50% NH-Zellstoff 50% LH-Zellstoff UV-stabilisiert (s.o.) | 100% NH-Zellstoff unbehandelt | 100% NH-Zellstoff UV-stabilisiert (s.o.) |
|---|---|---|---|---|
| Transparenz[4] (nach Verpressung) | keine Einschränkung | keine Einschränkung | keine Einschränkung | keine Einschränkung |
| UV-Stabilität nach Bestrahlung[5] 24 h Wollskala Report | 7 winkelabhängig erkennbare Minderung der Farbintensität | 8 unverändert | 7 winkelabhängig erkennbare Minderung der Farbintensität | 8 unverändert |
| 168 h Wollskala Report | 4 winkelunabhängig erkennbare Farbveränderung | 7 winkelabhängig erkennbare Minderung der Farbintensität | 4-5 winkelunabhängig erkennbare Farbveränderung | 7-8 winkelabhängig erkennbare Minderung der Farbintensität |
| 627 h Wollskala Report | 3-4 winkelunabhängig erkennbare Farbveränderung | 6-7 winkelabhängig erkennbare Minderung der Farbintensität | 3 winkelunabhängig erkennbare Farbveränderung | 6-7 winkelabhängig erkennbare Minderung der Farbintensität |
| UV-Stabilität nach natürlicher Lichteinstrahlung[6] 168 h Wollskala Report | 8 unverändert | 8 unverändert | 8 unverändert | 8 unverändert |
| 3320 h Wollskala Report | 7 winkelabhängig erkennbare Minderung der Farbintensität | 8 unverändert | 7 winkelabhängig erkennbare Minderung der Farbintensität | 8 unverändert |
| Gehalt UV-Stabilisator[7] nach Harzpenetration | | 97,5 % | | 96,8 % |

**Patentansprüche**

1. Overlaypapier, das ein Zellstoffvlies umfasst, das mit einem UV-Stabilisierungsmittel in einer Menge von 0,001 bis 10 Gew.-%, bezogen auf das Flächengewicht des eingesetzten Vlieses, beaufschlagt ist.

**2.** Overlaypapier nach Anspruch 1, wobei das UV-Stabilisierungsmittel in einer Menge von 0,01 bis 3 Gew.-%, bezogen auf das Flächengewicht des eingesetzten Vlieses, vorhanden ist.

**3.** Overlaypapier nach einen der Ansprüche 1 oder 2, wobei das UV-Stabilisierungsmittel aus Benzotriazolen, Diphenylacrylaten, Cinnamaten, sterisch gehinderten Aminen und Benzophenonen ausgewählt ist.

**4.** Overlaypapier nach einem der vorhergehenden Ansprüche, wobei das Overlaypapier ein Flächengewicht zwischen 8 und 100 $g/m^2$ aufweist.

**5.** Overlaypapier nach einem der vorhergehenden Ansprüche, wobei es zusätzlich ein Melaminformaldehydharz in einer Menge von 0,1 bis 20 Gew.-% Trockensubstanz Melaminformaldehydharz, bezogen auf das eingesetzte Fasergewicht, enthält.

**6.** Verfahren zur Herstellung des erfindungsgemäßen Overlaypapiers, bei dem unter Verwendung einer Papiermaschine das Vlies nach einer primären Trocknung mit einem UV-Stabilisierungsmittel in einer Menge von 0,001 bis 10 Gew.-%, bezogen auf das Flächengewicht des eingesetzten Vlieses, beaufschlagt wird.

**7.** Verfahren nach Anspruch 6, wobei das UV-Stabilisierungsmittel mittels der Leimpresse aufgebracht wird.

**8.** Verfahren nach Anspruch 6, wobei das UV-Stabilisierungsmittel über einen Sprühbalken aufgebracht wird.

**9.** Verwendung eines Overlaypapiers gemäß einem der Ansprüche 1 bis 5 zur Herstellung eines Laminats.

Europäisches Patentamt

## EUROPÄISCHER RECHERCHENBERICHT

Nummer der Anmeldung

EP 02 02 8521

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 858 516 A (OU-YANG DAVID T) 12. Januar 1999 (1999-01-12) * Ansprüche 1-7 * --- | 1-4,6 | D21H27/28 B32B29/00 |
| X | US 3 616 021 A (VALERIUS PAUL NICHOLAS) 26. Oktober 1971 (1971-10-26) * Ansprüche 1-10; Beispiel 2 * --- | 1-6,9 | |
| X | GB 1 230 107 A (PRODUCTS CHIMIQUES ET CELLULOSES REY) 28. April 1971 (1971-04-28) * Ansprüche 1-12 * --- | 1-6,9 | |
| X | DATABASE WPI Derwent Publications Ltd., London, GB; AN 1991-143883 XP002231483 & JP 03 079302 A (AIKA KOGYO KK), 4. April 1991 (1991-04-04) * das ganze Dokument * --- | 1,5,6,9 | |
| A | EP 0 338 786 A (HOECHST CELANESE CORP) 25. Oktober 1989 (1989-10-25) * das ganze Dokument * --- | 1-9 | RECHERCHIERTE SACHGEBIETE (Int.Cl.7) D21H B32B |
| A | US 4 670 490 A (YOSHIDA TATSURO ET AL) 2. Juni 1987 (1987-06-02) * das ganze Dokument * --- | 1-9 | |
| A | WO 95 06568 A (NEVAMAR CORP) 9. März 1995 (1995-03-09) * das ganze Dokument * --- | 1-9 | |
| A | US 5 089 348 A (LOUDERBACK LAUREN G) 18. Februar 1992 (1992-02-18) * das ganze Dokument * ----- | 1-9 | |

Der vorliegende Recherchenbericht wurde für alle Patentansprüche erstellt

| Recherchenort | Abschlußdatum der Recherche | Prüfer |
|---|---|---|
| MÜNCHEN | 17. Februar 2003 | Karlsson, L |

## ANHANG ZUM EUROPÄISCHEN RECHERCHENBERICHT
### ÜBER DIE EUROPÄISCHE PATENTANMELDUNG NR.

EP 02 02 8521

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 5858516 | A | 12-01-1999 | AU | 7152398 A | 24-11-1998 |
| | | | DE | 69804207 D1 | 18-04-2002 |
| | | | DE | 69804207 T2 | 21-11-2002 |
| | | | EP | 0979437 A1 | 16-02-2000 |
| | | | JP | 2002500782 T | 08-01-2002 |
| | | | WO | 9849605 A1 | 05-11-1998 |
| US 3616021 | A | 26-10-1971 | NL | 7015070 A | 04-05-1971 |
| GB 1230107 | A | 28-04-1971 | FR | 1528741 A | 14-06-1968 |
| | | | BE | 714141 A | 24-10-1968 |
| | | | DE | 1769242 A1 | 16-03-1972 |
| | | | NL | 6805846 A | 28-10-1968 |
| JP 3079302 | A | 04-04-1991 | KEINE | | |
| EP 0338786 | A | 25-10-1989 | US | 4914039 A | 03-04-1990 |
| | | | CA | 1335480 A1 | 09-05-1995 |
| | | | EP | 0338786 A2 | 25-10-1989 |
| | | | JP | 2012250 A | 17-01-1990 |
| | | | JP | 2626048 B2 | 02-07-1997 |
| | | | US | 5348834 A | 20-09-1994 |
| | | | US | 5429903 A | 04-07-1995 |
| | | | US | 5212041 A | 18-05-1993 |
| US 4670490 | A | 02-06-1987 | JP | 1494484 C | 20-04-1989 |
| | | | JP | 60004543 A | 11-01-1985 |
| | | | JP | 63024619 B | 21-05-1988 |
| | | | AU | 572126 B2 | 05-05-1988 |
| | | | AU | 2587084 A | 03-01-1985 |
| | | | CA | 1233591 A1 | 01-03-1988 |
| | | | DE | 3472967 D1 | 01-09-1988 |
| | | | EP | 0134389 A2 | 20-03-1985 |
| WO 9506568 | A | 09-03-1995 | US | 5466511 A | 14-11-1995 |
| | | | AT | 173437 T | 15-12-1998 |
| | | | AU | 679565 B2 | 03-07-1997 |
| | | | AU | 7720194 A | 22-03-1995 |
| | | | BR | 9407383 A | 29-10-1996 |
| | | | CA | 2170905 A1 | 09-03-1995 |
| | | | DE | 9422233 U1 | 17-06-1999 |
| | | | DE | 69414713 D1 | 24-12-1998 |
| | | | DE | 69414713 T2 | 29-04-1999 |
| | | | DK | 716635 T3 | 02-08-1999 |
| | | | EP | 0716635 A1 | 19-06-1996 |
| | | | ES | 2124429 T3 | 01-02-1999 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**

EP 02 02 8521

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2003

| Im Recherchenbericht angeführtes Patentdokument | | Datum der Veröffentlichung | Mitglied(er) der Patentfamilie | | Datum der Veröffentlichung |
|---|---|---|---|---|---|
| WO 9506568 | A | | JP | 2935897 B2 | 16-08-1999 |
| | | | JP | 8512255 T | 24-12-1996 |
| | | | KR | 175713 B1 | 01-04-1999 |
| | | | NZ | 273775 A | 24-10-1997 |
| | | | RU | 2128263 C1 | 27-03-1999 |
| | | | WO | 9506568 A1 | 09-03-1995 |
| | | | US | 5866207 A | 02-02-1999 |
| | | | US | 5866208 A | 02-02-1999 |
| | | | US | 5866209 A | 02-02-1999 |
| | | | US | 5807608 A | 15-09-1998 |
| US 5089348 | A | 18-02-1992 | CA | 2018360 A1 | 03-01-1991 |

EPO FORM P0461

Für nähere Einzelheiten zu diesem Anhang : siehe Amtsblatt des Europäischen Patentamts, Nr.12/82